# EUROPÄISCHE PATENTSCHRIFT

(11) **EP 2 030 885 B1**
(45) Veröffentlichungstag und Bekanntmachung des Hinweises auf die Patenterteilung: **06.04.2011**
(21) Anmeldenummer: 08163046.9
(22) Anmeldetag: 27.08.2008
(51) Int. Cl.: B62K 21/26, B62K 21/12

(54) **Fahrradgriff**
Bicycle handle-bar grip
Poignée de vélo

(30) Priorität: 30.08.2007 DE 202007012180 U
(43) Veröffentlichungstag der Anmeldung: 04.03.2009
(73) Patentinhaber: RTI Sports Vertrieb von Sportartikeln GmbH, 56220 Urmitz (DE)
(72) Erfinder: Tofaute, Kim, 56070 Koblenz (DE); Bandli, Curdegn, 7433 Donat (CH)
(74) Vertreter: von Kreisler Selting Werner

(56) Entgegenhaltungen:
- EP-A- 1 712 460
- EP-A1- 1 174 318
- EP-A2- 2 014 544
- WO-A-2004/048187
- WO-A1-99/39970
- WO-A1-2007/025990
- DE-C- 425 252
- DE-U1- 9 112 567
- DE-U1- 29 812 462
- US-A1- 2003 084 747
- US-A1- 2003 167 873

## Beschreibung

Die Erfindung betrifft einen Fahrradgriff, insbesondere für Trekkingfahrräder und Mountainbikes.

Fahrradgriffe für Trekkingräder und Mountainbikes weisen ggf. zusätzlich zu dem auf den Lenker steckbaren Griffelement ein am Lenkerende vorgesehenes Halteelement, ein sogenanntes Barend auf. Das Barend dient zum Umgreifen während der Fahrt, um die Hand in eine andere Griffposition zu bringen.

Aus EP 1 712 460 A1 ist ein Fahrradgriff mit einem derartigen Halteelement bekannt. Dieser Fahrradgriff weist als auf den Lenker aufsteckbares Griffelement eine teilweise geschlitzte Hülse auf, die von einem üblicherweise aus weicheren Material hergestellten Greifelement umgeben ist. Das Greifelement weist einen flügelförmigen Ansatz auf, der als Auflageelement für den Handteller dient, um während der Fahrt die Hand zu entlasten. Die Befestigung des Griffelements am Lenker erfolgt dadurch, dass das Barend mit einem geschlitzten Klemmelement verbunden ist. Mit Hilfe einer Schraube wird der Innendurchmesser des Klemmelements verringert. Dies bewirkt ein Zusammendrücken der geschlitzten Hülse des Griffelements und somit ein klemmendes Befestigen des Griffelements am Lenker.

Die in EP 1 712 460 A1 beschriebenen Befestigung eines Fahrradgriffs mit Barend und flügelförmigem Ansatz zur Handtellerauflage funktioniert bei relativ kurzen Barends zufriedenstellend. Bei langen Barends, die insbesondere länger als 5 cm, insbesondere länger als 8 cm sind, hat sich gezeigt, dass beim Greifen des Barends am äußeren Ende im Klemmbereich hohe Momente auftreten. Dies kann zu einem Verdrehen der Hülse auf dem Lenker führen. Dies führt einerseits zu einer Dejustage des Fahrradgriffs und zu Verunsicherungen des Fahrradfahrers.

Ferner ist aus WO-A-99/39970 ein Fahrradgriff mit einem Griffelement und einem Halteelement bekannt. Das Halteelement ist unmittelbar klemmend auf dem Lenkerende befestigt. Ferner weist das Halteelement einen stiftförmigen Ansatz auf, der in eine Bohrung an dem Griffelement eingreift.

Aus WO-A-2007 02 5990 ist auch ein Fahrradgriff mit einen Griffelement und einem Halteelement bekannt.

Aufgabe der Erfindung ist es, einen Fahrradgriff zu schaffen, der auch bei hohen auftretenden Kräften und Momenten verdrehsicher mit dem Lenker verbindbar ist.

Die Lösung der Aufgabe erfolgt erfindungsgemäß durch die Merkmale des Anspruchs 1.

Der erfindungsgemäße Fahrradgriff weist ein auf den Lenker steckbares Griffelement sowie ein mit dem Lenkerende verbindbares Halteelement bzw. Barend auf. Das Halteelement ist mit einem Klemmelement verbunden, wobei das Klemmelement und das Halteelement auch einstückig ausgebildet sein können. Das Klemmelement dient zum klemmenden Befestigen des Halteelements unmittelbar auf dem Lenkerende. Erfindungsgemäß wird das Halteelement über das Klemmelement somit direkt am Lenkerende ohne Vorsehen eines Zwischenelements befestigt. Insbesondere ragt im Unterschied zu dem in EP 1 712 460 A1 beschriebenen Fahrradgriff keine geschlitzte Hülse des Griffelements in den Klemmbereich des Klemmelements hinein. Dies hat zur Folge, dass eine Werkstoffpaarung zwischen Klemmelement und Lenker gewählt werden kann, die auch bei langen Barends ein sicheres Klemmen gewährleistet, so dass ein Verdrehen des Barends vermieden ist. Vorzugsweise ist das Klemmelement aus Aluminium oder einem anderen Metall. Auch kann die an dem Lenker in montiertem Zustand anliegende Klemmfläche des Klemmelements eine definierte Rauhigkeit zur Reibungserhöhung aufweisen.

Um ein gesondertes Befestigen des Griffelements an dem Lenker zu vermeiden ist das Griffelement erfindungsgemäß über eine Verdrehsicherung mit dem Klemmelement oder dem einstückig mit dem Klemmelement ausgebildeten Halteelement verbunden. Als Verdrehsicherung ist an dem Klemmelement oder dem einstückig mit dem Klemmelement ausgebildeten Halteelement ein erstes Formschlusselement vorgesehen, das mit einem am Griffelement vorgesehenen zweiten Formschlusselement zusammen wirkt. Auf Grund der formschlüssigen Verbindung zwischen dem Klemmelement bzw. dem einstückig mit dem Klemmelement ausgebildeten Halteelement und dem Griffelement ist ein Verdrehen des Griffelements vermieden. Das Griffelement kann somit derart ausgebildet sein, dass ein einfaches Aufstecken des Griffelements auf den Lenker möglich ist. Hierdurch ist die Montage des erfindungsgemäßen Fahrradgriffs vereinfacht. Auch ist es möglich, ein Griffelement mit einem flügelförmigen Ansatz zum Abstützen des Handtellers vorzusehen. Auf Grund der Verdrehsicherung ist auch beim Auftreten durch von auf den Handteller wirkenden Kräften hervorgerufenen Momenten ein Verdrehen des Griffelements vermieden.

Die Formschlusselemente weisen mehrere sich radial erstreckende Ansätze auf, die jeweils in korrespondierende, sich radial erstreckende Ausnehmungen eingreifen, um eine zuverlässige Verdrehsicherung zu realisieren. Bei einer derartigen Verzahnung weist das erste Formschlusselement eine radial angeordnete Verzahnung auf, die in eine als zweites Formschlusselement dienende, ebenfalls radial verlaufende Verzahnung eingreift.

Die zweiten Formschlusselemente können während der Montage entstehen. Dies kann beispielsweise dadurch erfolgen, dass sich erste Formschlusselemente, wie Zacken oder Ansätze, die an dem insbesondere aus Aluminium hergestellten Klemmelement vorgesehen sind, in das Griffelement eindrücken und hierbei eine insbesondere plastische Verformung des entsprechenden Bereichs des Griffelements hervorrufen.

Vorzugsweise erfolgt das Halten des Griffelements ausschließlich durch die Formschlusselemente, so dass ein zusätzliches Halte- oder Klemmelement an dem Griffelement nicht vorgesehen sein muss. Das Klemmmittel ist in bevorzugter Ausführungsform entsprechend einer Schelle aufgebaut und weist eine Verdickung zur Aufnahme eines Klemmmittels, wie einer Schraube, auf. Im Bereich der Verdickung ist sodann vorzugsweise ein Schlitz vorgesehen, um den Innendurchmesser des Klemmmittels zum Klemmen an dem Lenkerende verringern zu können.

Das Griffelement ist in bevorzugter Ausführungsform mehrteilig ausgebildet. Insbesondere weist das Griffelement eine in montiertem Zustand an dem Lenker anliegende Hülse aus ggf. härterem Material auf. Die Hülse ist insbesondere zylindrisch ausgebildet und ungeschlitzt. Die Hülse ist von einem insbesondere aus weicherem Material hergestellten Greifelement umgeben, wobei die Verbindung zwischen dem Greifelement und der Hülse durch Aufkleben, Anspritzen oder dgl. erfolgen kann.

Das mit der Hülse verbundene Greifelement weist vorzugsweise einen flügelförmigen Ansatz zum Abstützen des Handtellers auf. Ggf. kann mit der Hülse ein in den flügelförmigen Ansatz ragender, zur Versteifung dienender Vorsprung vorgesehen sein, der als eine Art Skelett dient. Besonders bevorzugt ist es, an dem Greifelement Greifflächen aus unterschiedlichem Material vorzusehen. Insbesondere sind die Greifflächen aus weicherem Material, aus Material mit einer anderen Oberflächenrauhigkeit etc. vorgesehen, um die unterschiedlichen Bereiche der Hand einerseits gut zu entlasten, gleichzeitig aber einen sicheren Griff zu gewährleisten. Die Griffflächen sowie der flügelförmige Ansatz müssen exakt justiert sein. Ein Verdrehen des Griffelements ist bei Griffelemente mit einem flügelförmigen Ansatz und/ oder Griffflächen zu vermeiden. Dies ist erfindungsgemäß durch Vorsehen der vorstehend beschriebenen Verdrehsicherung gewährleistet.

Bei einer besonders bevorzugten Ausführungsform ist zusätzlich zu der Verdrehsicherung eine insbesondere in die Verdrehsicherung integrierte Verschiebesicherung vorgesehen. Durch die Verschiebesicherung ist sichergestellt, dass ein Verschieben des Griffelements in Längsrichtung des Lenkers nach innen vermieden ist. Durch eine Verschiebung des Griffelements nach innen könnten die Formschlusselemente außer Eingriff geraten, so dass sodann ein unerwünschtes Verdrehen des Griffelements möglich wäre. Dies ist durch die Verschiebesicherung vermieden.

Die Verschiebesicherung weist ein Verbindungselement, wie einen stiftförmigen Ansatz oder eine Schraube auf, die im Wesentlichen radial angeordnet ist und eine derartige Verbindung zwischen dem Griffelement, insbesondere der Hülse des Griffelements, und dem Klemmelement oder dem Halteelement herstellt, das auf das Griffelement, in dessen Längsrichtung insbesondere nach innen wirkende Kräfte übertragen werden können. Hierdurch ist ein Verschieben des Griffelements nach innen und ein ungewolltes Außer-Eingriff-Bringen der Formschlusselemente vermieden.

Die Verschiebesicherung weist in einer bevorzugten Ausführungsform mindestens einen Ansatz auf, der im Wesentlichen in radialer Richtung verläuft und in eine Ausnehmung greift. Hierbei ist der mindestens eine Ansatz an dem Klemmelement vorgesehen und greift in mindestens eine an der Hülse vorgesehene Ausnehmung. Die Höhe des Ansatzes ist hierbei vorzugsweise derart gewählt, dass bei geöffnetem Klemmelement der Ansatz über die Hülse geschoben werden kann und durch die Montage des Klemmelements in die in der Hülse vorgesehene Ausnehmung verschoben wird. Die Höhe des Ansatzes ist vorzugsweise kleiner oder gleich dem Durchmesserunterschied des Klemmelements in unmontiertem zu montiertem Zustand.

Bei einer besonders bevorzugten Ausführungsform ist die Verschiebesicherung, insbesondere die Verbindungselemente der Verschiebesicherung, in den beiden Formschlusselementen integriert. Dies kann durch Integration der vorstehenden Ansätze und Ausnehmungen erfolgen. Ferner kann dies beispielsweise dadurch erfolgen, dass zumindest ein Teil der ersten Formschlusselemente als im Wesentlichen radial verlaufende Verzahnung vorgesehen sind, wobei sich der Innendurchmesser der Verzahnung in Richtung des Greifelements verringert. Hierdurch ist eine konische Ausgestaltung der Verzahnung realisiert. Die einen geringeren Innendurchmesser aufweisenden Bereiche der Verzahnung können sich in die zweiten Formschlusselemente beispielsweise eindrücken und somit Axialkräfte aufnehmen, so dass ein Verschieben des Griffelements in Längsrichtung des Lenkers nach innen vermieden ist. Ggf. sind die zweiten Formschlusselemente korrespondierend ausgebildet und weisen somit eine im Wesentlichen radial verlaufende Verzahnung auf, deren Außendurchmesser in Richtung des Klemmelements zunimmt.

Bei einer besonders bevorzugten Weiterbildung der Erfindung weist das Klemmelement einen in das Halteelement ragenden Ansatz, wie einen insbesondere plattenförmigen Aluminiumkern, auf. Der Ansatz ist von dem Halteelement, das vorzugsweise aus Kunststoffmaterial hergestellt ist, umgeben. Besonders bevorzugt ist es, das Halteelement zumindest teilweise aus faserverstärktem Kunststoff, insbesondere kohlefaserverstärktem Kunststoff, herzustellen.

Das Halteelement kann aus zwei Halteschalen hergestellt werden, die den Ansatz des Klemmelements aufnehmen und beispielsweise durch Verkleben miteinander verbunden werden. Die Halteschalen können zur Gewichtsersparnis einen Hohlraum ausbilden. Der insbesondere plattenförmige Ansatz ragt vorzugsweise jeweils in einen Schlitz der beiden Halteschalen. Hierdurch ist gewährleistet, dass auf das Barend während des Fahrens wirkende, im Wesentlichen vertikale Kräfte zuverlässig auf das Klemmelement und von diesem auf den Lenker übertragen werden.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht eines unmontierten Fahrradgriffs,
- Fig. 2: eine schematische Draufsicht des in Fig. 1 dargestellten Fahrradgriffs in montiertem Zustand,
- Fig. 3: eine schematische Schnittansicht des montierten Fahrradgriffs,
- Fig. 4a: eine schematische Draufsicht einer ersten Halteschale des Halteelements,
- Fig. 4b: eine schematische Draufsicht des Klemmelements,
- Fig. 4c: eine schematische Draufsicht der zweiten Halteschale des Halteelements,
- Fig. 5: eine schematische Draufsicht des aus den in Fig. 4a bis Fig. 4c dargestellten Teilen hergestellten Halteelements, und
- Fig. 6: eine schematische perspektivische Ansicht einer weiteren Ausführungsform eines Halteelements.

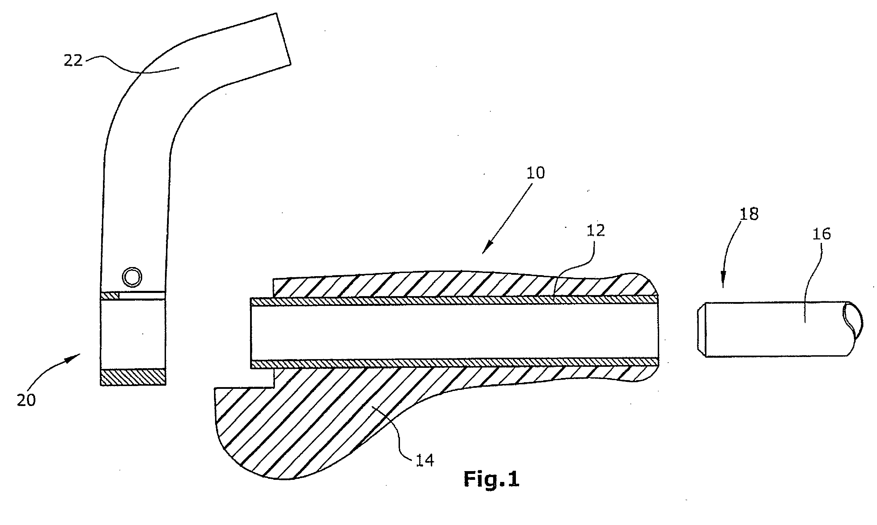

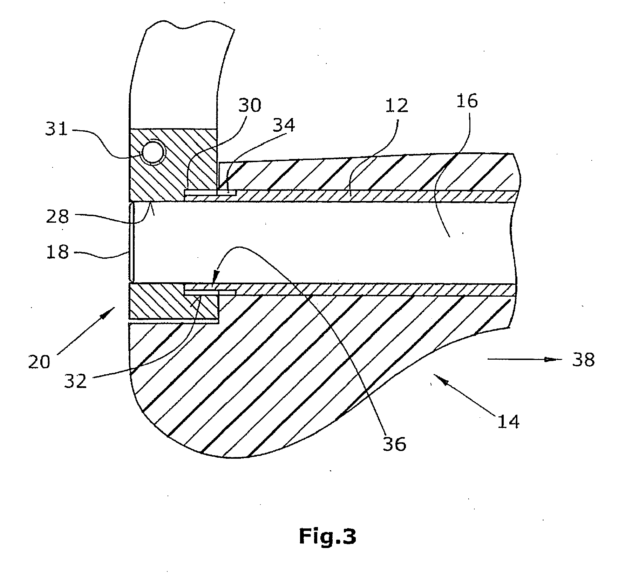

Ein Griffelement 10 weist eine ungeschlitzte zylindrische Hülse 12 auf, die von einem Greifelement 14 umgeben ist. Das Greifelement 14 ist auf die Hülse 12 aufgespritzt oder aufgeklebt. Das Griffelement 10 kann auf einen Lenker 16 aufgeschoben werden. Ein Lenkerende 18 des Lenkers 16 steht über das in Fig. 1 linke Ende der Hülse 12 vor. Auf das Lenkerende 18 wird ein Klemmelement 20 (Fig. 3) aufgeschoben. Das Klemmelement 20 ist mit einem Barend oder Halteelement 22 verbunden, beispielsweise einstückig ausgebildet.

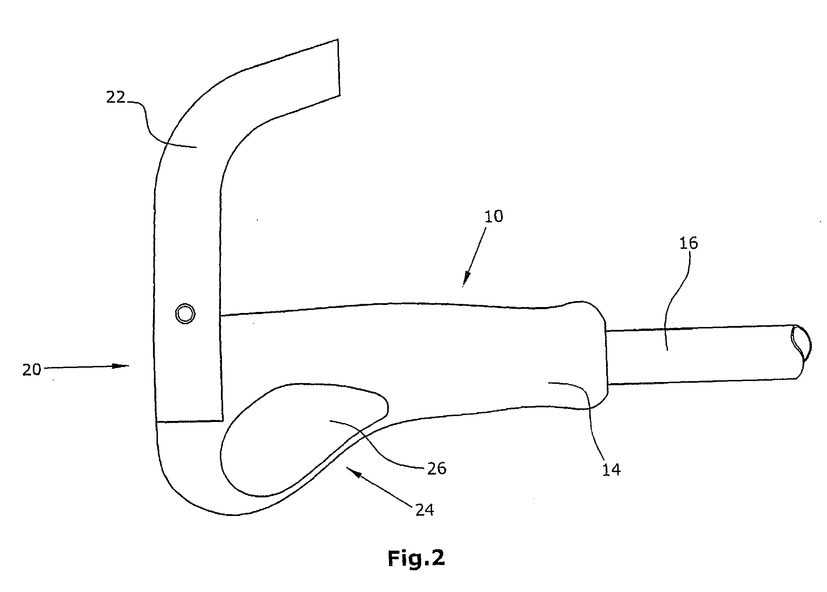

In montiertem Zustand (Fig. 2) ist das Griffelement 10 über das Klemmelement 20 zusammen mit dem Halteelement 22 an dem Lenker 16 fest gehalten. In dem dargestellten Ausführungsbeispiel handelt es sich um ein Griffelement, dessen Greifelement 14 einen flügelförmigen Ansatz 24 zur Auflage eines Handtellers aufweist. Im Bereich der Handtellerauflage kann eine aus anderem Material hergestellte Grifffläche 26 beispielsweise zur Dämpfung vorgesehen sein. Das insbesondere aus Aluminium hergestellte Klemmelement 20 weist eine vorzugsweise zylindrische Klemmfläche 28 (Fig. 3) auf. Die Klemmfläche 28 liegt an der Außenseite des ebenfalls zylindrisch ausgebildeten Lenkerendes 18 an. Über ein Klemmittel, das eine Schraube aufweist, die in ein Gewinde 31 eingreift, kann der Innendurchmesser der Klemmfläche 28 reduziert werden, da das Klemmelement 20 einen im Wesentlichen radial verlaufenden Schlitz aufweist. Auf Grund der Werkstoffpaarung zwischen Lenkerende 18 und Klemmelement 20 kann über die Klemmfläche 28 eine hohe Klemmkraft aufgebracht werden. Hierdurch ist auch bei langen Halteelementen bzw. Barends 22 und den hierdurch auftretenden hohen Momenten an der Klemmfläche 28 ein Verdrehen des Halteelements 22 vermieden.

Um auch ein Verdrehen des Griffelements 10 zu vermeiden, sind als erste Formschlusselemente 30 radial nach innen in Richtung des Lenkers 16 weisende Zähne vorgesehen. Im dargestellten Ausführungsbeispiel sind somit die ersten Formschlusselemente 30 als eine sich um den gesamten Innenumfang eines Ansatzes 32 erstreckende Verzahnung ausgebildet.

Als zweite Formschlusselemente 34 weist die Hülse 12 ebenfalls eine Verzahnung auf. Diese ist an dem Außenumfang der Hülse 12 in einem Endbereich 36 der Hülse vorgesehen, der in montiertem Zustand in das Klemmelement 20 ragt.

Durch das erfindungsgemäße Klemmelement 20 ist somit über die Klemmfläche 28 ein verdrehsicheres Verbinden mit dem Lenker 16 und gleichzeitig eine verdrehsichere Verbindung zu dem Griffelement 10 realisiert.

Um ein Verschieben oder Verrutschen des Griffelements 10 nach innen in Richtung eines Pfeils 38 zu vermeiden, kann die Verzahnung 30 konisch ausgebildet sein, so dass der in Richtung der Hülse 12 weisende Teil der Verzahnung 30 einen verringerten Innendurchmesser aufweist. Die im dargestellten Ausführungsbeispiel das zweite Formschlusselement ausbildende Verzahnung 34 kann ggf. ebenfalls konisch ausgebildet sein, wobei der in Richtung des Klemmelements 20 weisende Außendurchmesser sodann einen größeren Durchmesser als der in Fig. 3 rechte Teil der Verzahnung 34 aufweist.

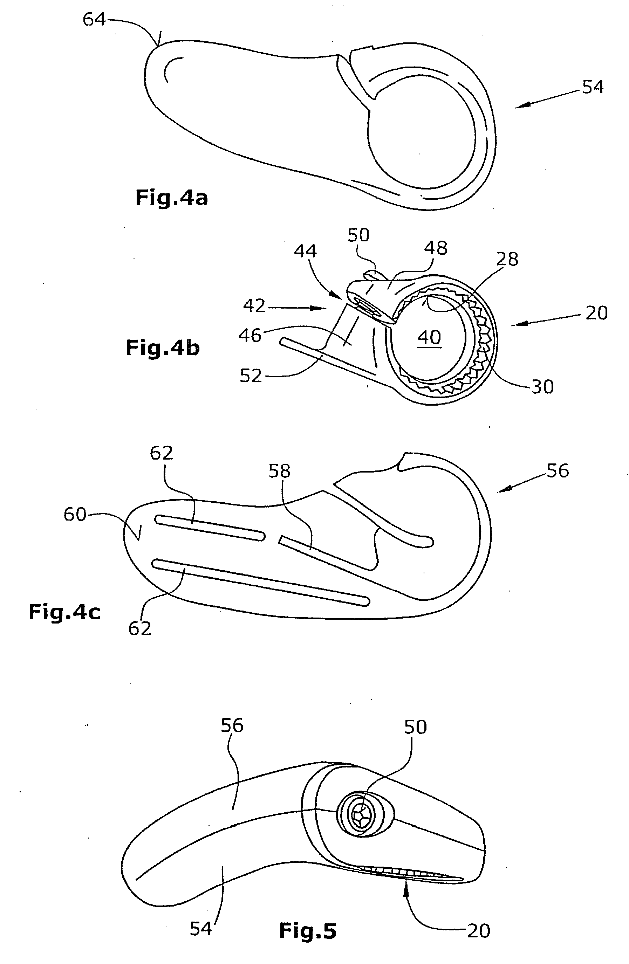

Das Klemmelement 20 ist vorzugsweise, wie insbesondere in dem in Fig. 4a bis Fig. 4c dargestellten Ausführungsbeispiel dargestellt, als gesondertes Bauteil ausgebildet. Bei dem Klemmelement 20 handelt es sich insbesondere um ein Aluminium-Bauteil. Das Klemmelement 20 weist einen ringförmigen Teil mit einer Durchgangsöffnung 40 auf, die über das Lenkerende 18 gesteckt wird. Hierdurch ist die zylindrische Klemmfläche 28 ausgebildet. Ferner ist durch den Ring neben der Klemmfläche 28 die radiale Ansätze bzw. Zähne aufweisende Verzahnung 30 ausgebildet. Das ringförmige Element des Klemmelements 20 ist mit einer Verdickung 42 versehen. Die Verdickung 42 weist einen bis in die Öffnung 40 ragenden Schlitz 44 auf. In einem ersten Teil 46 der Verdickung ist die Gewindebohrung 31 (Fig. 3) vorgesehen. In einem zweiten Teil 48 der Verdickung ist eine Durchgangsöffnung vorgesehen, durch die eine Schraube 50 gesteckt werden kann, die sodann in das Gewinde 31 greift. Durch Anziehen der Schraube 50 erfolgt ein Verringern der Schlitzbreite 44 und somit ein Verringern des Durchmessers der Öffnung 40.

Mit der Verdickung 42 ist ein insbesondere flacher Ansatz 52 verbunden, der in montiertem Zustand von zwei Halteschalen 54, 56 (Fig. 4a, 4c) umgeben ist.

Die beiden insbesondere aus einem kohlefaserverstärktem Kunststoff hergestellten Halteschalen 54, 56 weisen jeweils einen Schlitz 58 auf, in dem der flache Ansatz 52 in montiertem Zustand angeordnet ist. Zum Verbinden der beiden Halteschalen, beispielsweise durch Verkleben, weist die Halteschale 56 an einer Innenseite 60 Stege 62 auf, die in entsprechende Ausnehmungen an einer Innenseite 64 der Halteschale 54 eingreifen.

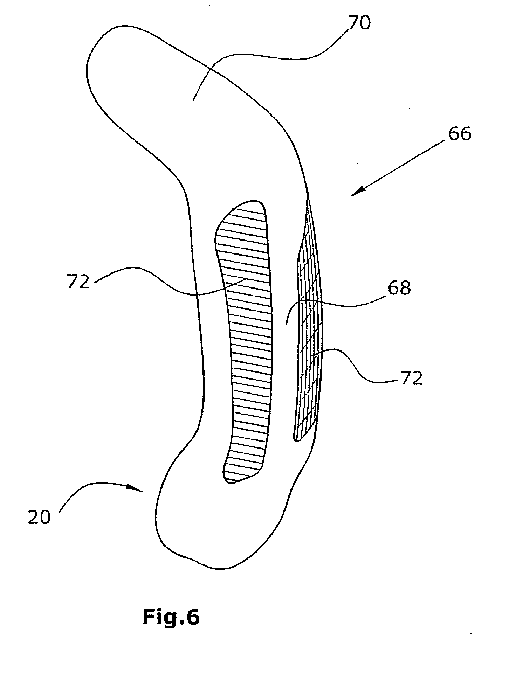

Bei einer alternativen Ausführungsform eines Halteelements 66 (Fig. 6) ist zur Befestigung an dem Lenkerende 18 ebenfalls ein Klemmelement 20 vorgesehen. Das Halteelement 66 weist einen ersten Greifbereich 68 auf, der im Wesentlichen senkrecht zum Lenker verläuft. Der erste Greifbereich 68 geht in einen zweiten, zu dem ersten Greifbereich 68 abgewinkelten zweiten Greifbereich 70 über. Dieser weist bei montiertem Lenkerende 18 nach innen und kann im Wesentlichen parallel zum Lenker angeordnet sein.

Im ersten Greifbereich 68 sind Greifflächen 72 aus anderem Material integriert, um ein möglichst angenehmes ergonomisches Greifen zu ermöglichen.

## Patentansprüche

1. Fahrradgriff, insbesondere für Trekkingräder und Mountainbikes, mit
einem über einen Lenker (16) steckbaren Griffelement (10),
einem seitlich mit einem Lenkerende (18) verbindbaren Halteelement (22) zum Greifen des Fahrradgriffs in einer anderen Griffposition und einem mit dem Halteelement verbundenen Klemmelement (20) zum klemmenden Befestigen des Halteelements (22) unmittelbar auf oder direkt an dem Lenkerende (18), und
einem am Klemmelement (20) oder am einstückig mit dem Klemmelement (20) ausgebildeten Halteelement (22) vorgesehenen ersten Formschlusselement (30), das mit einem am Griffelement (10) vorgesehenen zweiten Formschlusselement (34) zusammen wirkt, um ein Verdrehen des Griffelements (10) auf dem Lenker (18) zu vermeiden,
**dadurch gekennzeichnet,**
**dass** das erste Formschlusselement eine radial angeordnete Verzahnung (30) aufweist, die mit einer radial angeordneten Verzahnung (34) des zweiten Formschlusselements zusammen wirkt.

2. Fahrradgriff Anspruch 1, **dadurch gekennzeichnet, dass** das Klemmelement (20) insbesondere an einer Klemmfläche (28) ein Material aufweist, das in der Materialpaarung mit dem Lenkermaterial eine hohe Reibung gewährleistet.

3. Fahrradgriff nach Anspruch 1 oder 2, **dadurch gekennzeichnet, dass** das Klemmelement (20) eine insbesondere in Richtung des Halteelements (22) weisende Verdickung (42) zur Aufnahme eines Klemmmittels (50) aufweist.

4. Fahrradgriff nach Anspruch 3, **dadurch gekennzeichnet, dass** die Verdickung (42) einen Klemmschlitz (44) aufweist.

5. Fahrradgriff nach einem der Ansprüche 1 bis 4, **dadurch gekennzeichnet, dass** das Griffelement (10) eine insbesondere ungeschlitzte Hülse (12) aufweist, die von einem Greifelement (14) insbesondere vollständig umgeben ist.

6. Fahrradgriff nach Anspruch 5, **dadurch gekennzeichnet, dass** das Greifelement (14) zum Abstützen eines Handtellers einen insbesondere flügelförmigen Ansatz (24) aufweist.

7. Fahrradgriff nach Anspruch 5 oder 6, **dadurch gekennzeichnet, dass** das Greifelement (14) Griffflächen (26) aus gegenüber dem Greifelement (14) anderem Material aufweist.

8. Fahrradgriff nach einem der Ansprüche 5 bis 8, **dadurch gekennzeichnet, dass** das zweite Formschlusselement (34) an der Hülse angeordnet ist.

9. Fahrradgriff nach einem der Ansprüche 1 bis 8, **gekennzeichnet durch** eine Verschiebesicherung, **durch** die ein Verschieben des Griffelements (10) vermieden ist.

10. Fahrradgriff nach Anspruch 9, **dadurch gekennzeichnet, dass** die Verschiebesicherung ein in Längsrichtung (38) des Griffelements (10) verlaufende Kräfte aufnehmendes Verbindungselement aufweist, das das Griffelement (10) mit dem Klemmelement (20) oder dem Halteelement (22) verbindet.

11. Fahrradgriff nach Anspruch 10, **dadurch gekennzeichnet, dass** das Verbindungselement einen im Wesentlichen in radiale Richtung verlaufenden Ansatz aufweist, der in montiertem Zustand in eine Ausnehmung greift.

12. Fahrradgriff nach Anspruch 10 oder 11, **dadurch gekennzeichnet, dass** das Verbindungselement in die beiden Formschlusselemente (33, 34) integriert ist.

13. Fahrradgriff nach Anspruch 12, **dadurch gekennzeichnet, dass** das erste Formschlusselement (30) als im Wesentlichen radial verlaufende Verzahnung ausgebildet ist, deren Innendurchmesser sich in Richtung des Griffelements (10) verringert.

14. Fahrradgriff nach Anspruch 13, **dadurch gekennzeichnet, dass** das zweite Formschlusselement (34) als im Wesentlichen radial verlaufende Verzahnung ausgebildet ist, deren Außendurchmesser sich in Richtung des Klemmelements vergrößert.

15. Fahrradgriff nach einem der Ansprüche 1 bis 14, **dadurch gekennzeichnet, dass** das Klemmelement (20) einen in das Halteelement (22) ragenden Ansatz (52) aufweist, der von einem das Halteelement (22) ausbildenden Kunststoffmaterial umgeben ist.

16. Fahrradgriff nach Anspruch 15, **dadurch gekennzeichnet, dass** das Halteelement (22) zwei den Ansatz (52) aufnehmende Halteschalen (54, 56) aufweist.

17. Fahrradgriff nach Anspruch 16, **dadurch gekennzeichnet, dass** die Halteschalen (54, 56) einen Hohlraum ausbilden.

## Claims

1. A bicycle handlebar grip, in particular for trekking bicycles and mountain bikes, comprising
a grip element (10) to be slipped on a handlebar (16),
a holding element (22) adapted to be connected sideways to a handlebar end (18), said element serving to grip the bicycle handlebar grip in another gripping position, and a clamping element (20) connected to said holding element for clampingly attaching the holding element (22) immediately on or directly in front of the handlebar end (18), and
a first positive locking element (30) provided at the clamping element (20) or the holding element (22) formed integrally with the clamping element (20), said positive locking element cooperating with a second positive locking element (34) provided at the grip element (10), so as to prevent the rotation of the handlebar grip element (10) on the handlebar (18),
**characterized in that**
the first positive locking element comprises a radial toothing (30) cooperating with a radial toothing (34) of the second positive locking element.

2. The bicycle handlebar grip of claim 1, **characterized in that**, especially on a clamping face (28), the clamping element (20) comprises a material which in a material combination with the handlebar material guarantees high friction.

3. The bicycle handlebar grip of claim 1 or 2, **characterized in that** the clamping element (20) has an enlargement (42) for receiving a clamping means (50), the enlargement being directed in particular towards the holding element (22).

4. The bicycle handlebar grip of claim 3, **characterized in that** the enlargement (42) comprises a clamping slot (44).

5. The bicycle handlebar grip of one of claims 1 to 4, **characterized in that** the grip element (10) comprises a sleeve (12), in particular a non-slotted sleeve, enclosed in particular completely by a gripping element (14).

6. The bicycle handlebar grip of claim 5, **characterized in that** said gripping element (14) comprises a protrusion (24), in particular of a wing-like shape, for supporting the palm of a hand.

7. The bicycle handlebar grip of claim 5 or 6, **characterized in that** the gripping element (14) comprises gripping surfaces (26) of a material different from that of the gripping element (14).

8. The bicycle handlebar grip of one of claims 5 to 7, **characterized in that** the second positive locking element (34) is provided on the sleeve.

9. The bicycle handlebar grip of one of claims 5 to 8, **characterized by** an anti-displacement means preventing the displacement of the grip element (10).

10. The bicycle handlebar grip of claim 9, **characterized in that** the anti-displacement means comprises a connecting element absorbing forces acting in the longitudinal direction (38) of the grip element (10), said connecting element connecting the grip element (10) to the clamping element (20) or the holding element (22).

11. The bicycle handlebar grip of claim 10, **characterized in that** the connecting element comprises a projection extending substantially radially, which engages into a recess when mounted.

12. The bicycle handlebar grip of claim 10 or 11, **characterized in that** the connecting element is integrated in the two positive locking elements (30, 34).

13. The bicycle handlebar grip of claim 12, **characterized in that** said first positive locking element (30) is designed as a substantially radial toothing whose inner diameter decreases towards said grip element (10).

14. The bicycle handlebar grip of claim 13, **characterized in that** said second positive locking element (34) is designed as a substantially radial toothing whose outer diameter increases towards said clamping element (10).

15. The bicycle handlebar grip of one of claims 1 to 14, **characterized in that** the clamping element (20) comprises a projection (52) extending into the holding element (22) and being enclosed by a plastic material forming said holding element (22).

16. The bicycle handlebar grip of claim 15, **characterized in that** holding element (22) comprises two holding shells (54, 56) receiving said projection (52).

17. The bicycle handlebar grip of claim 16, **characterized in that** the holding shells (54, 56) form a cavity.

## Revendications

1. Poignée de vélo, notamment pour des vélos de randonné ou des vélos de tout terrain, comprenant
un élément de poignée (10) apte à être mis sur un guidon (16),
un élément de prise (22), apte à être connecté à une extrémité du guidon (18), pour saisir ladite poignée de vélo dans une autre position de prise, et un élément de serrage (20) pour la fixation par serrage dudit élément de prise (22) immédiatement sur ou directement à l'extrémité du guidon (18), et
un premier élément de liaison mécanique (30) prévu à l'élément de serrage (20) ou à l'élément de prise (22) formé d'un seul tenant avec ledit élément de serrage (20), ledit élément de liaison mécanique coopérant avec un deuxième élément de liaison (34) pour empêcher la rotation dudit élément de poignée (10) sur ledit guidon (16),
**caractérisée en ce que**
ledit premier élément de liaison mécanique comprend une dentelure radiale (30) coopérant avec une dentelure radiale (34) dudit deuxième élément de liaison.

2. Poignée de vélo selon la revendication 1, **caractérisée en ce que** ledit élément de serrage (20) comprend, notamment à une face de serrage (28), un matériau assurant un frottement fort en combinaison avec le matériau du guidon.

3. Poignée de vélo selon les revendications 1 ou 2, **caractérisée en ce que** ledit élément de serrage (20) comprend un élargissement (42), orienté notamment vers ledit élément de prise (22), pour recevoir un moyen de serrage (50).

4. Poignée de vélo selon la revendication 3, **caractérisée en ce que** ledit élargissement (42) comprend une fente de serrage (44).

5. Poignée de vélo selon l'une quelconque des revendications 1 à 4, **caractérisée en ce que** ledit élément de poignée (10) comprend une douille (12), notamment sans fente, qui est entourée notamment complètement d'un élément de préhension (14).

6. Poignée de vélo selon la revendication 5, **caractérisée en ce que** ledit élément de préhension (14) comprend une saillie (24), notamment en forme d'une aile, pour supporter la paume d'une main.

7. Poignée de vélo selon les revendications 5 ou 6, **caractérisée en ce que** ledit élément de préhension (14) comprend des surfaces de préhension (26) d'un matériau différent du matériau dudit élément de préhension (14).

8. Poignée de vélo selon l'une quelconque des revendications 5 à 8, **caractérisée en ce que** ledit deuxième élément de liaison mécanique (34) est prévue à la douille.

9. Poignée de vélo selon l'une quelconque des revendications 1 à 8, **caractérisée par** un moyen antidéplacement empêchant le déplacement dudit élément de poignée (10).

10. Poignée de vélo selon la revendication 9, **caractérisée en ce que** le moyen antidéplacement comprend un élément connecteur absorbant les forces agissant dans la direction longitudinale (38) dudit élément de poignée (10), ledit élément connecteur connectant ledit élément de poignée (10) audit élément de serrage (20) ou audit élément de prise (22).

11. Poignée de vélo selon la revendication 10, **caractérisée en ce que** ledit élément connecteur comprend une saillie sensiblement radiale engageant dans un creux en état monté.

12. Poignée de vélo selon les revendications 10 ou 11, **caractérisée en ce que** ledit élément connecteur est intégré dans les deux éléments de liaison mécanique (30, 34).

13. Poignée de vélo selon la revendication 12, **caractérisée en ce que** ledit premier élément de liaison mécanique (30) est réalisé comme une dentelure sensiblement radiale, dont le diamètre intérieur diminue dans la direction dudit élément de poignée (10).

14. Poignée de vélo selon la revendication 13, **caractérisée en ce que** ledit deuxième élément de liaison mécanique (34) est réalisé comme une dentelure sensiblement radiale, dont le diamètre extérieur croît dans la direction dudit élément de serrage.

15. Poignée de vélo selon l'une quelconque des revendications 1 à 14, **caractérisée en ce que** ledit élément de serrage (20) comprend une saillie (52) saillant dans ledit élément de prise (22), ladite saillie étant entourée par la matière plastique formant ledit élément de prise (22).

16. Poignée de vélo selon la revendication 15, **caractérisée en ce que** ledit élément de prise (22) comprend deux coques de prise (54, 56) recevant ladite saillie (52).

17. Poignée de vélo selon la revendication 16, **caractérisée en ce que** lesdites coques de prise (54, 56) forment un creux.
